(19) Europäisches Patentamt / European Patent Office / Office européen des brevets

(11) **EP 2 225 847 B1**

(12) **FASCICULE DE BREVET EUROPEEN**

(45) Date de publication et mention
de la délivrance du brevet:
**31.10.2012 Bulletin 2012/44**

(21) Numéro de dépôt: **08872100.6**

(22) Date de dépôt: **17.11.2008**

(51) Int Cl.:
*H04L 9/08* (2006.01)      *H04L 9/28* (2006.01)

(86) Numéro de dépôt international:
**PCT/FR2008/001614**

(87) Numéro de publication internationale:
**WO 2009/098379 (13.08.2009 Gazette 2009/33)**

(54) **PROCÉDÉ DE PARTAGE D'UN SECRET FORT ENTRE DEUX PARTIES DONT TUNE DISPOSE DE PEU DE PUISSANCE DE TRAITEMENT**

VERFAHREN ZUR TEILUNG EINES STARKEN GEHEIMNISSES ZWISCHEN BEI PARTEIEN, VON DENEN EINE EINE NIEDRIGE VERARBEITUNGSLEISTUNG AUFWEIST

METHOD OF SHARING A STRONG SECRET BETWEEN TWO PARTIES, ONE OF WHOM HAS LITTLE PROCESSING POWER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.11.2007 FR 0708102**

(43) Date de publication de la demande:
**08.09.2010 Bulletin 2010/36**

(73) Titulaire: **Paycool Development
34000 Montpellier (FR)**

(72) Inventeurs:
• **BERGSTEN, Ulrik
F-94100 Saint-maur Des Fosses (FR)**
• **GROSS, Christian
F-95450 Ableiges (FR)**
• **THIEBLEMONT, Jacques
F-34130 Mauguio (FR)**

(74) Mandataire: **Scheer, Luc
Global Inventions
38, Allée Valériane- Domaine de la Tour
83700 Saint-Raphael (FR)**

(56) Documents cités:
**WO-A-2007/044952**

• **BELLOVIN S M ET AL: "Encrypted key exchange: password-based protocols secure against dictionary attacks" PROCEEDINGS OF THE COMPUTER SOCIETY SYMPOSIUM ON RESEARCH IN SECURITY AND PRIVACY. OAKLAND, MAY 4 - 6, 1992; [PROCEEDINGS OF THE COMPUTER SOCIETY SYMPOSIUM ON RESEARCH IN SECURITY AND PRIVACY], LOS ALAMITOS, IEEE COMP. SOC. PRESS, US, vol. SYMP. 13, 4 mai 1992 (1992-05-04), pages 72-84, XP010029001 ISBN: 978-0-8186-2825-2 cité dans la demande**
• **BARMAWI A M ET AL: "Augmented encrypted key exchange using RSA encryption" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, vol. 2, 1 septembre 1997 (1997-09-01), pages 490-494, XP010247695 ISBN: 978-0-7803-3871-5**

## Description

## Introduction

La présente invention concerne un procédé de partage d'un secret fort entre deux parties, par combinaison de deux mécanismes cryptographiques, un mécanisme symétrique et un mécanisme asymétrique.

On a souvent besoin d'un mécanisme de transport de clé pour arriver à partager entre deux parties A, B un secret fort, tel que des clés cryptographiques.

## Etat de la technique :

Il existe déjà dans l'État de la technique des solutions de sécurisation de transactions utilisant des algorithmes cryptographiques.

Selon l'une des solutions existantes dans l'État de la technique, on échange un secret chiffré, le chiffrement se faisant au moyen d'un algorithme asymétrique à l'aide d'une clé publique, l'algorithme asymétrique étant typiquement de type RSA (inventé par Rivest, Shamir, et Adelman). Selon cet algorithme :

- on tire un aléa donc le secret du côté d'une première partie A ;
- on chiffre l'aléa avec la dé publique de l'autre partie B ;
- puis A communique le secret ainsi chiffre à B qui n'a plus qu'à le déchiffrer, de sorte que le secret se trouve alors partagé entre A et B.

Ceci suppose que d'une part la partie A qui transmet le secret ait la capacité de réaliser le chiffrement, et que d'autre part la partie B qui reçoit le secret chiffré ait elle-même la capacité de déchiffrer le secret ainsi reçu.

Bien entendu la force du secret ainsi partagé entre A et B est plafonnée par la force de la clé publique utilisée. Pour protéger la transmission du secret il est nécessaire d'utiliser des dés asymétriques de longueur suffisante par rapport à la force du secret Plus la longueur de la dé est importante plus les moyens de calcul nécessaires au chiffrement ou au déchiffrement doivent être importants si on veut pouvoir réaliser ces opérations dans des temps compatibles avec l'attente d'un utilisateur.

Le document D1" Encrypted key exchange: password-based protocols secure against dictionary attacks" de BELLOVIN S M ET AL, qui est considéré comme étant l'état de la technique le plus proche de l'objet de la revendication 1, décrit (les références entre parenthèses s'appliquent à ce document: voir les paragraphes 2 et 2.3) un procédé de partage d'un secret fort ("secure session key") entre deux parties ("A", "B") partageant préalablement un secret faible ("common password'), ce procédé de partage combinant un algorithme symétrique ("symmetric cryptosystem") et un algorithme asymétrique ("RSA") comprenant essentiellement les étapes suivantes:

- choix par A d'un modulus n et d' un exposant e constituant une clé publique RSA
- chiffrage par A de e avec le secret faible et l'algorithme symétrique
- envoi par A à B de n et e chiffré
- choix par B du secret fort
- déchiffrage par B de e
- envoi par B à A du secret fort chiffré avec la clé publique RSA
- déchiffrage par A du secret for avec la clé privée RSA.

Dans la suite, on considérera qu'un secret est réputé faible, s'il est mémorisable par un individu, et s'il est attaquable par une méthode dite de force brute.

Inversement, un secret sera réputé fort, si son expression est suffisamment longue pour ne pas pouvoir être mémorisée par un utilisateur, et s'il ne peut pas être attaqué par une méthode dite de force brute, avec la puissance des moyens actuels de traitement de données.

On voit donc que le procédé connu d'échange de dé mentionné plus haut et utilisant un algorithme asymétrique ne pose pas de problème particulier lorsque les deux parties A et B ont chacune une puissance de calcul suffisante pour utiliser une dé publique de force suffisante.

Mais un problème nouveau peut apparaître dans le cas où au moins l'une des deux parties A ou B possède des moyens de calcul relativement limités, qui en eux-mêmes ne permettent pas l'utilisation, lors du processus de partage, de clés asymétriques assurant un très bon niveau de sécurité.

Un tel cas de figure peut notamment se produire lorsque l'une des parties est un serveur de transaction, notamment un serveur bancaire, réputé apte à utiliser des dés de force suffisante, alors que l'autre partie est un simple téléphone mobile équipé d'une carte SIM sans crypto-processeur. Or ce cas de figure pourra de plus en plus souvent être rencontré dans le cadre de transactions dites de paiement mobile entre un téléphone mobile déjà équipé d'une telle carte SIM et un serveur de transaction de paiement

En effet, dans le cas du chiffrement d'un secret en utilisant une dé publique RSA de 1024 bits, on constate qu'un temps de traitement de l'ordre de 20 minutes serait nécessaire sur une carte SIM sans crypto-processeur. D'autres algorithmes asymétriques donnent des résultats sensiblement équivalents et en tout état de cause insuffisants pour résoudre le problème.

Or la résolution de ce problème nouveau permettrait notamment d'éviter le remplacement des cartes SIM existantes dépourvues de crypto-processeur, qui constituent un parc important Elle permettrait aussi d'éviter de passer à des cartes à crypto-processeur pour les nouvelles cartes SIM, sachant que de telles cartes présentent un surcoût significatif.

Mais le problème technique posé et sa solution envisagée plus loin n'ont pas vocation à se limiter au contexte particulier des transactions utilisant des cartes SIM, qui n'est cité dans la suite qu'à titre d'exemple non limitatif.

Un autre problème réside dans la taille du code implémentant l'algorithme de chiffrement asymétrique, qu'il est impératif d'optimiser en taille, au détriment des performances de rapidité. Ce problème est là encore particulièrement important dans l'environnement d'une carte SIM qui a peu de ressources mémoire.

Un but de l'invention est de résoudre les problèmes techniques posés ci-dessus.

Un but de l'invention est donc de proposer un procédé de partage d'un secret fort entre deux parties dont l'une au moins dispose de peu de puissance de traitement, permettant d'effectuer le partage d'un secret fort entre ces deux parties, dans un temps suffisamment court, notamment de moins d'une minute, pour être compatible avec les attentes des utilisateurs du procédé.

Une alternative connue pour raccourcir le temps de traitement consiste à passer d'une paire de dés asymétriques unique pour l'ensemble du système, à l'attribution d'une paire de dés à chaque utilisateur. Ceci permettrait d'accepter un léger affaiblissement de la sécurité, permettant ainsi d'utiliser des dés plus courtes et donc de raccourcir les temps de traitement.

Mais en pratique, des expérimentations réalisées avec des dés publiques de 768 bits de long à l'aide d'un processeur standard de carte SIM ont montré qu'un temps de traitement de 10 minutes est malgré tout nécessaire pour le partage de secret, ce qui est encore trop dans le cadre de l'application de paiement mobile envisagée.

En réalité, avec la puissance des processeurs actuels utilisés dans les cartes SIM des téléphones mobiles, seules des clés de 320 bits peuvent être utilisées dans un mécanisme cryptographique asymétrique de type RSA sans pénaliser de façon intolérable le temps de traitement. Mais il est devenu clair qu'une dé RSA de 320 bits ne représente plus un obstacle suffisant contre une attaque même simple menée contre la sécurité du système, même s'il y a des dés différentes pour chaque utilisateur.

En effet, avec des dés de 320 bits, la sécurité peut être compromise par un attaquant à l'aide d'un simple PC avec quelques heures de calcul, ce qui est un risque inacceptable, même pour la sécurité d'un seul utilisateur.

Une autre alternative déjà examinée dans l'état de la technique a consisté à renforcer la force d'un algorithme asymétrique grâce à l'existence d'un secret faible partagé au préalable entre les deux parties A et B.

La littérature a montré en effet qu'il existe une certaine équivalence entre la force des clés des algorithmes symétriques et la force des clés des algorithmes asymétriques. Ainsi on considère habituellement qu'avec une clé RSA 1024 bits, on a une force équivalente à une clé de 80 bits utilisée avec un algorithme symétrique.

Il en découle qu'il n'est pas possible de transporter sans perte une dé secrète de plus de 80 bits au moyen de son chiffrement par une dé publique de 1024 bits.

Supposons qu'on ait un tel besoin, sans pouvoir utiliser une dé publique de force supérieure, notamment pour des raisons de puissance de calcul insuffisante.

Supposons par ailleurs que les deux parties A, B partagent déjà un secret, appelé ici secret faible, qui peut être dans l'application envisagée, un code PIN de six ou neuf chiffres.

Mais il s'avère qu'on ne renforce pas la force d'un secret en combinant directement un mécanisme symétrique et un mécanisme asymétrique, car il reste possible d'attaquer de façon autonome le chiffrement symétrique ou le chiffrement asymétrique.

En effet, illustrons cette impasse par la cryptographie RSA.

Supposons qu'on chiffre d'abord l'aléa tiré par la première partie A, à l'aide du secret faible partagé, au moyen d'un algorithme symétrique de type DES (pour « Data Encryption Standard» en terminologie anglosaxonne) ou AES (pour « Advanced Encryption Standard »), puis que l'on chiffre le résultat par la dé publique RSA de l'autre partie B. On obtient un secret réputé fort, et un oracle est fourni par une utilisation quelconque de ce secret supposé fort

En fait, pour découvrir le secret fort, donc l'aléa tiré par A, il suffit de commencer par factoriser le modulus, partie prenante de la dé publique, et donc d'en déduire immédiatement la dé privée de l'autre partie B. Il est alors possible de déchiffrer le message, puis de s'attaquer au chiffrement symétrique basé ici sur un secret faible, en testant le message déchiffre par rapport à l'oracle.

De même, en sens inverse, où on chiffre d'abord l'aléa tiré par A avec la dé publique avant de surchiffrer par le secret faible, on arrive à la même faiblesse, c'est à-dire que là aussi il est possible d'attaquer de façon autonome les deux chiffrements.

Cela est simplement dû au principe même de l'algorithme asymétrique encore appelé à clé publique.

Il est ainsi possible de trouver indirectement la clé privée correspondant à la clé publique, non seulement par résolution d'un logarithme discret basé sur un oracle, mais surtout aussi directement par factorisation du modulus commun à la dé publique et à la clé privée.

Une alternative connue, décrite dans l'article intitulé « Encrypted Key Exchange : password-based protocols secure against dictionary attacks », de Steven M. Bellowin et Michale Merritt, publié dans « Proceedings of the IEEE Symposium on Research in Security and Privacy, Oakland, May 1992 », consiste à proposer une solution permettant aux deux parties A et B de se mettre d'accord en toute sécurité sur un secret fort construit par combinaison d'un mécanisme symétrique utilisant le secret faible, et d'un mécanisme asymétrique de force inférieure à celle du secret fort

Afin d'éviter la difficulté évoquée, l'alternative décrite dans l'article de Bellowin & Merritt met en oeuvre l'idée de garder la "clé publique" de A secrète en la communicant à l'autre partie B sous forme chiffrée au moyen du secret faible.

Or une dé publique RSA est constituée d'un modulus n facteur de deux nombres premiers, et d'un exposant e. Bellowin & Merritt ont considéré que pour être efficace, le chiffrement par secret faible de la dé publique RSA doit porter sur des éléments qu'il n'est pas possible de distinguer d'un aléa. D'où leur choix de chiffrer l'exposant e, choisi de façon aléatoire, plutôt que le modulus n. Or en prenant un exposant aléatoire donc potentiellement et probablement grand, le temps de chiffrement sur une SIM sans crypto-processeur reste prohibitif. De plus, le modulus étant communiqué en clair et de relativement petite taille, il est assez facile et rapide de le factoriser de façon autonome, ouvrant la voie à une attaque par force brute sur le seul secret faible. Donc la piste proposée par cet article ne permet pas de résoudre le problème posé.

Le principe de l'invention au contraire consiste à explorer la piste écartée par Bellowin & Merritt, et donc de chiffrer non pas l'exposant mais le modulus, au moyen du secret faible. En outre, au lieu d'utiliser un exposant aléatoire et potentiellement grand, l'invention propose d'utiliser un exposant petit et fixe, par exemple 3, qui reste public.

Il va être démontré que dans ce cadre, la combinaison du mécanisme symétrique et du mécanisme asymétrique entraîne bien comme l'avaient prévu Bellowin & Merritt une déperdition de la force du secret, mais que celle-ci reste acceptable dans le cadre des applications envisagées, et qu'elle peut même être compensée.

**Description détaillée de la solution proposée par invention:**

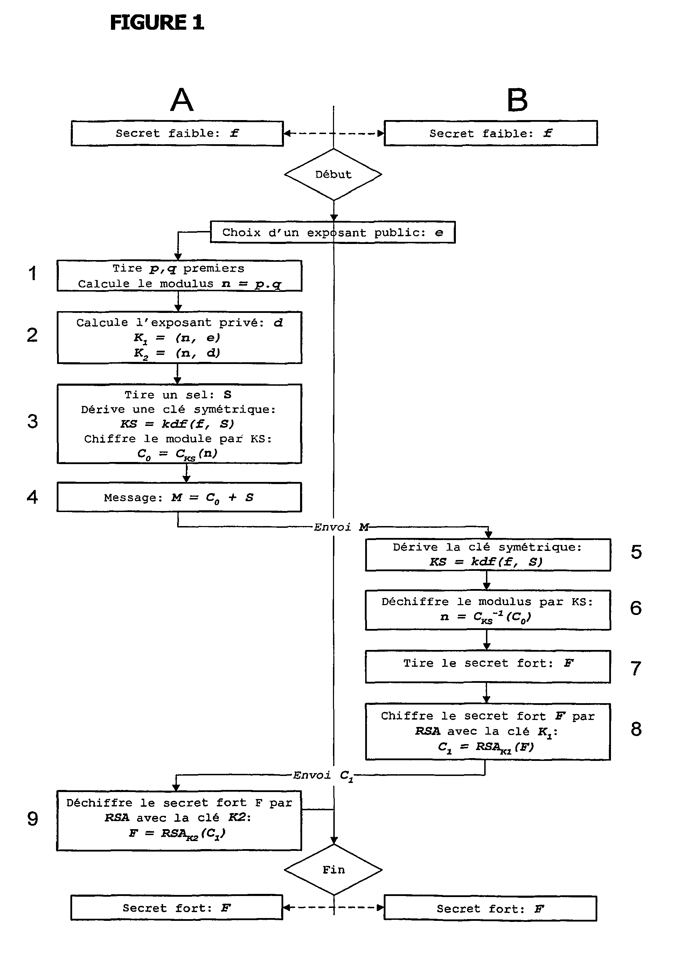

Le procédé selon l'invention va maintenant être décrit plus en détail en référence à la Figure 1.

Soient deux parties A et B qui partagent au préalable un secret faible, noté f, par exemple un mot de passe de quelques digits, notamment un mot de passe de 6 à 9 digits, soit 20 à 30 bits en code binaire. Le secret faible f est de préférence à usage unique pour un utilisateur donné, ce qui évitera la possibilité d'attaques dites par partition.

L'objectif est d'arriver pour A et B à se mettre d'accord en toute sécurité sur un secret fort, noté F, en utilisant le secret faible f et une paire de clés RSA de force inférieure à celle du secret fort F visé.

Pour commencer, le procédé comporte une étape consistant à choisir un exposant public e de petite taille, qui sera un paramètre du procédé. On choisira par exemple pour e une valeur parmi les suivantes : 3, 17, 65537.

Ensuite, le procédé consiste à faire effectuer par les parties (A, B) les opérations suivantes :

A va effectuer les opérations suivantes :

1. tirer au hasard deux nombres premiers p, q de taille suffisante, et calculer un modulus n = p*q, le signe * étant utilisé ici et dans la suite pour désigner l'opération de multiplication;
2. à partir du modulus n et de l'exposante, construire une paire de dés de l'algorithme asymétrique, à savoir une dé publique $K1 = (n, e)$ et une clé privée $K2 = (n, d)$ où d est l'exposant privé correspondant à l'exposant public e, à savoir $d = e^{-1}$ modulo (p-1)*(q-1);
3. tirer un aléa destiné à être utilisé comme sel S, et chiffrer le modulus n par l'algorithme symétrique en utilisant comme dé une dé KS dérivée du secret faible f et du sel S à l'aide d'une fonction de type kdf(f,S) ;
4. concaténer le sel S et le modulus n ainsi chiffré (noté $C_0$) et transmettre à B le message $M = C_0 + S$ ainsi constitué ;

Ensuite, B communique en réponse au message M transmis par A ce secret fort F chiffré avec adjonction éventuelle de bits de formatage, au moyen de la dé publique K1 constituée par le couple (n, e). Dans le détail, B va :

5. dériver la dé KS à partir du secret faible f, et du sel S extrait du message M transmis par A à l'aide d'une fonction de type kdf(f,S);
6. déchiffrer le modulus n tel que chiffré par A, à l'aide de l'algorithme symétrique et en utilisant comme dé ladite dé KS;
7. tirer un aléa, qui constitue le secret fort F;
8. chiffrer, avec adjonction éventuelle de bits de formatage, le secret fort F à l'aide de l'algorithme asymétrique et de la clé publique $K1 = (n, e)$ et communiquer à A le secret fort F ainsi chiffré, noté $C_1$.

Finalement, A va effectuer les opérations suivantes :

9. déchiffrer le secret fort chiffré $C_1$ tel que transmis par B, au moyen de l'algorithme asymétrique, en utilisant la dé privée $K2 = (n, d)$, et en laissant de côté les éventuels bits de formatage.

Il en résulte qu'à la fin de ces traitements par A et par B, les deux parties A et B sont toutes deux en possession du secret fort F qui est alors partagé.

Selon un mode de réalisation préféré de l'invention, l'algorithme asymétrique est de type RSA. L'algorithme symétrique est notamment type DES ou AES.

Selon une variante avantageuse de l'invention, au lieu de chiffrer un modulus n = p*q, la première partie A calcule n1 = (n-1)/2 et applique à n1 l'étape de chiffrement par l'algorithme symétrique, et la partie B reconstitue ensuite le modulus n en calculant n = n1*2 +1.

Cela permet de chiffrer une quantité n1 dont on ne peut présumer la parité alors que n, étant le produit de deux grands nombres premiers, est impair.

Le procédé selon l'invention est particulièrement adapté au cas où l'une des parties (A) est un serveur, notamment un serveur de transaction de paiement mobile, l'autre partie (B) étant une partie avec des ressources de calcul limitées, comme par exemple une carte à microprocesseur, notamment une carte SIM.

**Analyse de la solution :**

Un tiers pourrait observer les échanges entre A et B mais on suppose qu'il ne connaît pas leur secret faible f.

Le tiers ne peut pas directement factoriser le modulus n (qui est chiffré) et ainsi trouver la clé privée lui permettant de trouver le secret fort F transmis par B à A.

En effet, il ne connaît pas le modulus n , celui-ci étant dynamique et propre à chaque utilisateur et communiqué chiffré par A à B.

Il est en fait obligé de tester toutes les combinaisons possibles du secret faible f, ce qui lui donne alors des modulus possibles. Mais il doit ensuite factoriser chacun de ces modulus candidats pour enfin être capable de trouver le secret fort F par déchiffrement

Autrement dit la force du secret faible f et de la paire de dés RSA utilisée se combinent effectivement, c'est-à-dire s'additionnent

La combinaison entraine néanmoins une certaine déperdition de force D car le tiers pourra rapidement éliminer des candidats intermédiaires dans la mesure où il ne s'agit pas souvent d'un produit de deux nombres premiers, chacun étant de taille significative comme dans le cas d'un modulus utilisé pour une paire de dés RSA.

**Evaluation de la déperdition de force :**

Partons du théorème bien connu de la densité des nombres premiers (c'est-à-dire le nombre de nombres premiers inférieur à un nombre X, le tout divisé par X) : cette densité tend vers 1/Ln X.

Or en cryptographie RSA, le modulus est le produit de 2 nombres premiers.

D'où la question : quelle est la probabilité qu'un nombre X puisse s'exprimer sous la forme d'un produit de 2 nombres premiers ?"

Pour tenter d'y répondre, l'idée est, plutôt que de chercher à estimer directement la probabilité P en question, de raisonner en terme de génération d'un nombre X d'une taille N (N étant sa taille en nombre de bits) à partir de deux facteurs.

On suppose que pour être difficile à factoriser, le plus petit facteur devra être premier et d'une taille par exemple supérieure à N/3, soit T sa taille (comprise entre N/3 et N/2).

La probabilité qu'un tel nombre soit premier est de l'ordre de $1/Ln\ 2^T$

Le reste est d'une taille de l'ordre de N-T

La probabilité que ce reste soit premier est de l'ordre de $1/Ln\ 2^{(N-T)}$

Au total, la probabilité est de $1/(Ln\ 2^T * Ln\ 2^{(N-T)})$

Ensuite, pour calculer la totalité de la probabilité P, il suffit de faire varier T de N/3 à N/2 en sommant les résultats partiels.

Or $Ln\ 2^T = T*Ln\ 2$ et $Ln\ 2^{(N-T)} = (N-T)*Ln\ 2$. Le résultat partiel peut donc s'écrire : $1/(Ln\ 2)^2/(T*(N-T))$.

On sait que la somme pour T variant de N/3 à N/2 de $1/(T*(N-T))$ est approchée par l'intégrale de N/3 à N/2 de $dt/(t*(N-t))$.

Pour calculer cette intégrale, on fait un changement de variable : on pose $t = N/2*(1-x)$ et il reste à calculer l'intégrale de 1/3 à 0 de $-2/N/(Ln\ 2)^2*dx/(1-x^2)$.

Or la primitive de $dx/(1-x^2)$ est $1/2*Ln((1+x)/(1-x))$.

D'où le résultat du calcul de l'intégrale, c'est à-dire P : $1/N/Ln\ 2$ ou encore $1/Ln\ 2^N$ c'est à dire précisément la densité des nombres premiers inférieurs ou égaux à $2^N$.

En fait, si le critère de taille T du facteur premier le plus petit varie, on voit que dans tous les cas, la probabilité recherchée reste proportionnelle à la densité des nombres premiers inférieurs ou égaux à $2^N$, le facteur de proportionnalité ne dépendant pas de N.

Ainsi avec un seuil pour T de N/3, le facteur de proportionnalité est de Ln 2/Ln 2, soit 1. Avec un seuil de N/4, le facteur de proportionnalité passe à environ 1,6 (Ln 3/Ln 2). Avec un seuil de N/5 on obtient 2 (Ln 4/ln 2). Et avec un seuil de N/6 le facteur de proportionnalité augmente jusqu'à environ 2,3 (Ln 5/Ln 2). Et ainsi de suite.

Ce résultat assez remarquable représente la probabilité de tomber sur un nombre produit de 2 grands nombres premiers.

Plus cette probabilité est petite, plus la déperdition est grande. En effet, cela réduit d'autant le nombre de tentatives à effectuer jusqu'au bout dans une attaque par force brute.

Le nombre de bits de déperdition, soit D, est donné par la relation suivante :

$$1/P = 2^D$$

Dans la variante où on chiffre n1 plutôt que n, on réduit la déperdition de 1 bit (la probabilité P est doublée).

Concrètement, cela signifie qu'en mettant en oeuvre la présente solution avec une paire de dés RSA d'une longueur de N bits et en choisissant le nombre premier p d'une longueur aléatoire comprise entre N/2 et N/5 (donc le nombre premier q d'une longueur complémentaire à N), 1/P est de l'ordre de N*Ln 2/2/2, soit N*Ln 2 / 4 :

Par exemple, en prenant N=1024, on a 1/P égal à environ 179, donc compris entre $2^7$ et $2^8$, d'où une déperdition D d'au plus 8 bits.

Ainsi avec d'autres exemples pour N :

- si N est de 320 bits, la déperdition de force due à la combinaison est équivalente à 6 bits en symétrique ;
- si N est de 512 bits, la déperdition est équivalente à 7 bits en symétrique.

Autrement dit, en combinant un chiffrement symétrique au moyen d'un secret faible f de par exemple 30 bits (soit à peu près un PIN de 9 chiffres décimaux) et un chiffrement asymétrique au moyen d'une paire de dés de 1024 bits, équivalent à une force de 80 bits en symétrique, on obtient au total une force de 30 + 80 - 8 = 102 bits en symétrique.

A noter que selon un aspect de l'invention, on peut compenser cette déperdition de force de D bits en prévoyant $2^D$ boucles dans la dérivation de la clé à partir du sel et du secret faible f. Ce procédé est connu sous le nom de « password-based key dérivation function ». On arrive ainsi dans l'exemple pris ci-dessus, où N est égal à 1024 et D = 8, à une force de 30 +80 - 8 + 8 = 110 bits en symétrique, soit à peu près à la force du Triple-DES.

Cette force est suffisante pour résister à toutes les attaques connues avec les moyens de calculs actuels et prévisibles à moyen terme.

**Avantages de l'invention :**

L'invention permet de répondre au but fixé, de sorte qu'il est possible de calculer et de transporter un secret fort F entre deux parties A, B, tout en faisant en sorte que la charge de calcul au niveau de la partie faible B reste inférieure à celle qui serait nécessaire en utilisant uniquement un algorithme asymétrique pour le calcul et le transfert du secret fort.

Autrement dit on peut réellement additionner la force du secret faible f et de la paire de clés RSA en optimisant le temps d'exécution et la taille du code côté client Cela peut notamment être utile lorsque le client est implémenté dans une carte SIM sans crypto - processeur mais disposant d'un moteur DES performant.

**Revendications**

1. Procédé de partage d'un secret fort F entre deux parties (A, B) partageant préalablement un secret faible f, ce procédé de partage combinant un algorithme symétrique et un algorithme asymétrique, **caractérisé par** le choix d'un exposant public e de petite taille et par le fait qu'il comporte les étapes successives consistant à faire effectuer par les parties (A, B) les opérations suivantes :

   • pour A :

      1. tirer au hasard deux nombres premiers p, q et calculer un modulus n = p*q ;
      2. à partir du modulus n et de l'exposant e, construire une paire de dés de l'algorithme asymétrique, à savoir une clé publique K1 = (n, e) et une clé privée K2 = (n, d) où d est l'exposant privé correspondant à l'exposant public e;
      3. tirer un aléa destiné à être utilisé comme sel S, et chiffrer le modulus n par l'algorithme symétrique en utilisant comme clé une dé KS dérivée du secret faible f et du sel S ;
      4. concaténer le sel S et le modulus n ainsi chiffré ($C_0$) et transmettre à B le message M ainsi constitué ;

   • pour B :

      5. dériver la dé KS à partir du secret faible f, et du sel S extrait du message M transmis par A ;
      6. déchiffrer le modulus n tel que chiffré par A, à l'aide de l'algorithme symétrique et en utilisant comme clé ladite clé KS;
      7. tirer un aléa, qui constitue le secret fort F;
      8. chiffrer le secret fort F à l'aide de l'algorithme asymétrique et de la clé publique K1= (n, e) et communiquer à A le secret fort F ainsi chiffré ;

   • pour A :

      9. déchiffrer le secret fort F tel que transmis chiffré par B, au moyen de l'algorithme asymétrique, en utilisant la dé privée K2 = (n, d), de sorte qu'à la fin de ces traitements par A et par B, les deux parties A et B sont toutes deux en possession du secret fort F.

2. Procédé selon la revendication 1, **caractérisé en ce que** l'algorithme asymétrique est de type RSA (Rivest, Shamir, Adelman).

3. Procédé selon la revendication 1, **caractérisé en ce que** l'algorithme symétrique est de type DES ou AES.

4. Procédé selon l'une quelconque des revendications précédentes, **caractérisé en ce qu'**au lieu de chiffrer un modulus n = p*q, la première partie A calcule n1 = (n-1)/2 et applique à n1 l'étape de chiffrement par l'algorithme symétrique, et la partie B reconstitue le modulus n en calculant n = n1*2 + 1.

5. Procédé selon l'une quelconque des revendications précédentes, **caractérisé en ce qu'**il comporte une étape consistant à renforcer de D bits la force du secret fort en utilisant $2^D$ boudes dans l'étape de calcul de la dé dérivée à partir du sel S et du secret faible f.

6. Procédé selon l'une quelconque des revendications précédentes, **caractérisé en ce que** l'une des parties (A) est un serveur, notamment un serveur de transaction de paiement mobile.

7. Procédé selon l'une quelconque des revendications précédentes, **caractérisé en ce que** l'autre partie (B) est une partie avec des ressources de calcul limitées.

8. Procédé selon la revendication 7, **caractérisé en ce que** l'autre partie (B) est une carte à microprocesseur, notamment une carte SIM.

9. Procédé selon la revendication 1, **caractérisé en ce que** l'exposant public prend l'une des valeurs parmi 3, 17 ou 65537.

**Claims**

1. Method for sharing a strong secret F between two parties (A, B) previously sharing a weak secret f, this sharing method combining a asymmetrical algorithm and an asymmetrical algorithm, **characterized by** the choice of a small public exponent e and by the fact that it comprises the successive steps consisting in having the parties (A, B) perform the following operations:

   • for A:

   1. drawing at random two prime numbers p, q and calculating a modulus n = p*q;
   2. from the modulus n and the exponent e, constructing a pair of keys for the asymmetrical algorithm, namely a public key K1 = (n, e) and a private key K2 = (n, d) in which d is the private exponent corresponding to the public exponent e;
   3. drawing a random variable intended to be used as salt S, and encrypting the modulus n by the symmetrical algorithm using as the key a key KS derived from the weak secret f and from the salt S;
   4. concatenating the salt S and the duly encrypted modulus n ($C_0$) and transmitting the duly constructed message M to B;

   • for B:

   5. deriving the key KS from the weak secret f, and from the salt S extracted from the message M transmitted by A;
   6. decrypting the modulus n as encrypted by A, using the symmetrical algorithm and using as the key said key KS;
   7. drawing a random variable, which constitutes the strong secret F;
   8. encrypting the strong secret F using the asymmetrical algorithm and the public key K1 = (n, e) and communicating the duly encrypted strong secret F to A;

   • for A:

   9. decrypting the strong secret F as transmitted encrypted by B, by means of the asymmetrical algorithm, using the private key K2 = (n, d), so that, at the end of these processing operations by A and by B, the two parties A and B are both in possession of the strong secret F.

2. Method according to Claim 1, **characterized in that** the asymmetrical algorithm is of RSA (Rivest, Shamir, Adelman) type.

3. Method according to Claim 1, **characterized in that** the symmetrical algorithm is of DES or AES type.

4. Method according to any one of the preceding claims, **characterized in that**, instead of encrypting a modulus n = p*q, the first party A calculates n1 = (n-1)/2 and applies to n1 the step of encryption by the symmetrical algorithm, and the party B reconstructs the modulus n by calculating n = nl*2+1.

5. Method according to any one of the preceding claims, **characterized in that** it includes a step consisting in reinforcing by D bits the strength of the strong secret by using $2^D$ loops in the step for calculating the key derived from the salt S and from the weak secret F.

6. Method according to any one of the preceding claims, **characterized in that** one of the parties (A) is a server, in particular a mobile payment transactions server.

**7.** Method according to any one of the preceding claims, **characterized in that** the other party (B) is a party with limited calculation resources.

**8.** Method according to Claim 7, **characterized, in that** the other party (B) is a microprocessor card, in particular a SIM card.

**9.** Method according to Claim 1, **characterized in that** the public exponent, takes one of the values from 3, 17 or 65537.

## Patentansprüche

**1.** Verfahren zur Teilhabe an einem starken Geheimnis F für zwei Teilnehmer (A, B), die vorher an einem schwachen Geheimnis f teilhaben, wobei dieses Teilhabeverfahren einen symmetrischen Algorithmus und einen asymmetrischen Algorithmus kombiniert, **gekennzeichnet durch** die Wahl eines öffentlichen Exponenten e mit kleiner Größe und **durch** die Tatsache, dass es die aufeinander folgenden Schritte umfasst, die darin bestehen, **durch** die Teilnehmer (A, B) die folgenden Operationen auszuführen:

- für A:

1. zufälliges Ziehen von zwei Primzahlen p, q und Berechnen eines Modulus $n = p*q$;
2. anhand des Modulus n und des Exponenten e Konstruieren eines Schlüsselpaars des asymmetrischen Algorithmus, nämlich eines öffentlichen Schlüssels $K1 = (n, e)$ und eines privaten Schlüssels $K2 = (n, d)$, wobei d der private Exponent ist, der dem öffentlichen Exponenten e entspricht;
3. Ziehen einer Zufallszahl, die dazu vorgesehen ist, als Salz S verwendet zu werden, und Chiffrieren des Modulus n mit dem symmetrischen Algorithmus unter Verwendung eines Schlüssels KS, der aus dem schwachen Geheimnis f und dem Salz S abgeleitet wird, als Schlüssel;
4. Verketten des Salzes S und des auf diese Weise chiffrierte Modulus n ($C_0$) und Senden der somit gebildeten Nachricht M zu B;

- für B:

5. Ableiten des Schlüssels KS anhand des schwachen Geheimnisses f und des Salzes S, das aus der von A gesendeten Nachricht M extrahiert wird;
6. Dechiffrieren des Modulus n, wie er **durch** A chiffriert worden ist, mit Hilfe des symmetrischen Algorithmus und unter Verwendung des Schlüssels KS als Schlüssel;
7. Ziehen einer Zufallszahl, die das starke Geheimnis F bildet;
8. Chiffrieren des starken Geheimnisses F mit Hilfe des asymmetrischen Algorithmus und des öffentlichen Schlüssels K1 - (n, e) und Übermitteln des auf diese Weise chiffrierten starken Geheimnisses F an A;

- für A:

9. Dechiffrieren des chiffrierten starken Geheimnisses F, wie es von B übertragen wird, mittels des asymmetrischen Algorithmus unter Verwendung des privaten Schlüssels $K2 = (n, d)$, derart, dass am Ende dieser Verarbeitungen **durch** A und **durch** B die zwei Teilnehmer A und R beide im Besitz des starken Geheimnisses F sind.

**2.** Verfahren nach Anspruch 1, **dadurch gekennzeichnet, dass** der asymmetrische Algorithmus vom Typ RSA (Rivest, Shamir, Adelman) ist.

**3.** Verfahren nach Anspruch 1, **dadurch gekennzeichnet, dass** der symmetrische Algorithmus vom Typ DES oder AES ist.

**4.** Verfahren nach einem der vorhergehenden Absprüche, **dadurch gekennzeichnet**, anstelle des Chiffrierens eines Modulus $n = p*q$ der erste Teilnehmer A $n1 = (n - 1)/2$ berechnet und auf n1 den Schritt des Chiffrierens durch den symmetrischen Algorithmus anwendet und der Teilnehmer B wieder den Modulus n bildet, indem er $n - n1*2 + 1$ berechnet.

**5.** Verfahren nach einem der vorhergehenden Ansprüche, **dadurch gekennzeichnet, dass** es einen Schritt umfasst, der darin besteht, die Kraft des starken Geheimnisses um D Bits zu verstärker, indem $2^D$ Schleifen im Schritt des Berechnens des Schlüssels, der aus dem Salz S und den schwachen Geheimnis f abgeleitet wird, verwendet werden.

**6.** Verfahren nach einem der vorhergehenden Ansprüche, **dadurch gekennzeichnet, dass** einer der Teilnehmer (A) ein Server ist, insbesondere ein Server für mobile Zahlungstransaktionen.

**7.** Verfahren nach einem der vorhergehenden Ansprüche, **dadurch gekennzeichnet, dass** der andere Teilnehmer (B) ein Teilnehmer mit begrenzten Rechenbetriebsmitteln ist.

**8.** Verfahren nach Anspruch 7, **dadurch gekennzeichnet, dass** der andere Teilnehmer (B) eine Mikroprozessorkarte, insbesondere eine SIM-Karte, ist.

**9.** Verfahren nach Anspruch 1, **dadurch gekennzeichnet, dass** der öffentliche Exponent einen der Werte 3, 17 oder 65537 annimmt.

## FIGURE 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BELLOVIN S M.** *Encrypted key exchange: password-based protocols secure against dictionary attacks*

- **STEVEN M. BELLOWIN ; MICHALE MERRITT.** Encrypted Key Exchange : password-based protocols secure against dictionary attacks. *Proceedings of the IEEE Symposium on Research in Security and Privacy, Oakland,* Mai 1992